# EUROPEAN PATENT APPLICATION

(11) **EP 3 396 188 A1**
(43) Date of publication of application: **31.10.2018**
(21) Application number: 18178721.9
(22) Date of filing: 22.07.2015
(51) Int. Cl.: F16C 33/41, F16C 19/06

(54) **ROLLING BEARING**

(30) Priority: 23.07.2014 JP 2014150039
(62) Divisional of application: 15824122.4
(71) Applicant: Nachi-Fujikoshi Corp., Tokyo (JP)
(72) Inventor: YAMAMOTO, Keiichi, Toyama, 930-8511 (JP); TATSUSHIMA, Akira, Toyama, 930-8511 (JP); UENO, Yasuhiro, Toyama, 930-8511 (JP)
(74) Representative: Gevers Patents

(57) **Abstract**

The present invention provides a rolling bearing (100) that reduces the weight of a holder, that meanwhile maintains the rigidity of the holder itself, and that makes it possible to minimize increases in rotational torque even when rotating at an extremely high speed. The rolling bearing (100) comprises an inner ring (110), an outer ring (120), a plurality of rolling bodies (130), and a holder (1150) for holding the rolling bodies (130) between the inner ring (110) and the outer ring (120). The holder (1150) of the present invention comprises: an annular base section (1160); a plurality of seat sections (1170) that extend in the axial direction from the base direction (1160) and that are arranged along the circumferential direction of the base section (1160); two claw sections (1180) that are provided to both sides of the seat sections (1170) in the circumferential direction thereof so as to extend further in the axial direction from each of the seat sections (1170); and a plurality of pocket sections (1200) that are for holding the plurality of rolling bodies (130), each of said pocket sections (1200) comprising an inner surface (1171) that is formed between adjacent seat sections (1170) and between the facing claw sections (1180) of the adjacent seat sections (1170). The inner ring (110) and the outer ring (120) are separated from the holder (1150), the holder (1150) being guided by the rolling elements (130). The rolling bearing (100) is such that: the seat sections (1170) comprise an inner diameter surface (1170a) that has a larger inner diameter (Ds) than the inner diameter surface (1160a) of the base section (1160); and the pitch circle diameter (PCD) of the rolling bodies (130) is larger than the inner diameter (Ds) of the inner diameter surfaces (1170a) of the seat sections (1170). The base section (1160) comprises a bottom surface (1160b) on an opposite side to the seat sections (1170) in the axial direction, and the holder (1150) further comprises a blind hole (1172) which extends from the bottom surface (1160b) to the inside of the seat section (1170)..

## Description

### TECHNICAL FIELD

The present invention relates to a rolling bearing, and more particularly to a rolling bearing having an inner ring, an outer ring, a plurality of rolling elements, and a retainer for retaining the rolling elements between the inner ring and the outer ring.

### BACKGROUND ART

A rolling bearing, such as a ball bearing or a roller bearing, typically employs a retainer for retaining rolling elements (balls or rollers) which roll between track surfaces of the inner and outer rings of the bearing. Various retainers are known as such, which include a retainer having retention holes radially bored in an annular body and a resin crown retainer having pockets opening in an axial direction as described in Patent Literatures 1 and 2.

Meanwhile, bearings are required to reduce rotational torque and improve torque efficiency. On the other hand, when a bearing having a resin crown retainer rotates at high speed, a leading end of a claw section of the retainer adjacent to an opening of a pocket deforms to spread toward a radially outer side due to a centrifugal force.

One problem arising from the deformed claw section is that the claw section comes in contact with a track surface of an outer ring to cause friction, resulting in loss in rotational torque. Further, if an inner surface of the pocket is a curved surface (and/or a spherical surface) expanding along a rolling element, there is also a problem that this inner surface (more precisely, an inner diameter-side edge of the inner surface) comes in contact with the rolling element to increase the rotational torque.

Patent Literature 1 discloses a synthetic-resin retainer of a rolling bearing. According to Patent Literature 1, in order to achieve weight reduction while withstanding high-speed rotation of the bearing, there is provided a through-hole extending from a bottom surface of an annular base section (annular body) to an axial section which forms a pocket together with claw sections. Patent Literature 1 states that the weight of the retainer can be reduced thereby, so that deformation of the claw sections during high-speed rotation can be suppressed.

Patent Literature 2 discloses a retainer of a ball bearing, in which a flange is formed at an outer diameter-side circumferential edge of an annular body that is located on a bottom side of pockets. Patent Literature 2 states that the cross-sectional area of a bottom wall portion of the pockets is increased and the torsional rigidity is increased, so that deformation due to a centrifugal force can be suppressed.

### CITATION LIST

### PATENT LITERATURE

PATENT LITERATURE 1: JP-A-2009-536998
PATENT LITERATURE 2: JP-A-2009-008274

### SUMMARY OF INVENTION

### TECHNICAL PROBLEM

As described above, various attempts have been made to suppress deformation of the claw section of the retainer. However, even if the rigidity of the claw section is increased, the axial section and the claw section deform to open outward due to the centrifugal force during ultrahigh-speed rotation with a dmN value of 500,000 or higher, so that the edge of the inner surface of the pocket comes in contact with the rolling element. Thus, the technology of Patent Literature 1 cannot avoid increase in rotational torque either, since the axial section and the claw section still deform during ultrahigh-speed rotation and the edge of the inner surface of the pocket comes in contact with the rolling element. Exactly the same holds true for the technology of Patent Literature 2.

Note that the technology of Patent Literature 1 involves cutting off the outer diameter side of the claw section and the axial section to reduce the thickness thereof. Also, the technology of Patent Literature 2 involves forming the flange at the outer diameter-side circumferential edge of the annular body as described above, and the resulting shape is almost the same as that obtained by cutting off the claw section and the axial section on the outer diameter side. In the case of installing the rolling elements in the pockets of the retainer with such a shape, since the claw sections do not easily elastically deform toward the inner diameter side, the rolling element has to be pushed in by deforming the claw sections toward adjacent pockets (in the circumferential direction). However, when another rolling element is already installed in the adjacent pocket, there is no room for the claw section to deform, which makes the installation difficult.

Further, if the flange is formed as described in Patent Literature 2, the thickness of the annular base section becomes larger than that of the axial section, so that the weight of the retainer increases. The increase in weight of the retainer is one contributor to increased rotational torque during high-speed rotation. On the other hand, if the weight of the retainer is reduced by uniformly or partially reducing the dimensions (thickness) of the respective sections of the retainer to suppress rotational torque, the rigidity of the retainer itself decreases, which leads to degradation of the durability of the bearing.

Furthermore, when the bearing rotates at high speed, a lubricant, such as grease, packed inside the bearing moves toward the inner side of the outer ring due to the centrifugal force. Especially in the case of the structure of the retainer described in Patent Literature 1, the lubricant is more likely to move from the bottom surface side of the annular body of the retainer toward the outer diameter side of the axial section, i.e., toward the outer side of the outer ring. As a result, the amount of essential lubricant which is supposed to be retained inside the pockets on a track of the inner ring decreases, increasing the likelihood of seizure etc.

Therefore, one object of the present invention is to provide a rolling bearing which can achieve both reducing the weight of the retainer and securing the rigidity of the retainer itself, and can suppress increase in rotational torque even during ultrahigh-speed rotation.

Another object of the present invention is to provide a rolling bearing which includes a retainer capable of stocking (storing) a lubricant even during ultrahigh-speed rotation, and can thereby prevent running out of the lubricant during use.

### SOLUTION TO PROBLEM

To achieve the above objects, the present invention provides a rolling bearing having an inner ring, an outer ring, a plurality of rolling elements, and a retainer for retaining the rolling elements between the inner ring and the outer ring, the retainer including: an annular base section; a plurality of pedestal sections extending from the base section in an axial direction and arranged in a circumferential direction of the base section; two claw sections provided on both sides of each pedestal section in the circumferential direction so as to further extend from the pedestal section in the axial direction; and a plurality of pocket sections retaining the plurality of rolling elements, each pocket having an inner surface formed between adjacent ones of the pedestal sections and between the opposite claw sections of the adjacent pedestal sections, characterized in that the pedestal section has an inner diameter surface having a larger inner diameter than that of an inner diameter surface of the base section, and a pitch circle diameter of the rolling elements is larger than the inner diameter of the inner diameter surface of the pedestal section.

It is preferable that the annular base section have a bottom surface on an opposite side to the pedestal section in the axial direction, and the retainer have a hole section which penetrates the retainer between the bottom surface and the inner diameter surface of the pedestal section.

Alternatively, the retainer may have a blind hole which extends from the bottom surface to the inside of the pedestal section.

### ADVANTAGEOUS EFFECTS OF INVENTION

According to the present invention, the pedestal section of the retainer has the inner diameter surface with a larger inner diameter than that of the inner diameter surface of the base section, in other words, the radial thickness of the base section is larger than the radial thickness of the pedestal section. Thus, the rigidity of the retainer is secured, and even during ultrahigh-speed rotation with a dmN value of 500,000 or higher, the pedestal section is prevented from deforming so as to open toward a radially outer side by the centrifugal force. Moreover, this structure provides a large clearance between the inner diameter-side edge of the pocket and the ball so that, even when an excessive centrifugal force acts on the retainer, contact or contact stress between the pocket and the ball is suppressed and ultimately, increase in rotational torque is suppressed. Furthermore, by this structure, since a larger space is secured between the inner ring of the bearing and the inner diameter surface (pedestal section) of the retainer, a comparatively large amount of lubricant can be enclosed in this space and the lubricant can be prevented from moving toward the outer ring, so that seizure of the bearing is prevented.

Further, according to the present invention, since the pitch circle diameter of the rolling elements is larger than the inner diameter of the inner diameter surface of the pedestal section, even during ultrahigh-speed rotation with a dmN value of 500,000 or higher, the rolling elements (e.g., ball) prevent the pedestal sections and the claw sections from opening toward the outer side due to the centrifugal force by means of the edges of the inner surfaces (curved surfaces) of the pedestal sections forming the pockets.

The hole section provided in the retainer so as to penetrate the retainer between the bottom surface and the inner diameter surface of the pedestal section contributes to weight reduction of the retainer and ultimately of the bearing. Since such a hole section functions also as a grease holder (or a space in which a certain amount of lubricant can be stored), diffusion of the lubricant is prevented, and a certain amount of lubricant can be held even during ultrahigh-speed rotation with a dmN value of 500,000 or higher, so that the lubricant can be stably supplied to the pockets. In this way, this hole section makes it possible to prevent running out of the lubricant during use and reduce agitation resistance caused by an excessive amount of lubricant, and contributes to suppression of increase in rotational torque. Moreover, in the event of shortage of lubricant, this hole section functions also as a place to supply the lubricant, and thus also contributes to prevention of seizure of the bearing.

Note that the above-mentioned dmN value is an index well known among those skilled in the art, and is obtained by multiplying the pitch circle diameter dm (mm) of the rolling elements by the rotation speed N (rpm).

Alternatively, if the retainer is provided with a blind hole section which extends from the bottom surface to the inside of the pedestal section, it is possible to achieve weight reduction without reducing the outer-diameter dimensions of the respective sections of the retainer, and at the same time to secure the rigidity of the retainer itself.

### BRIEF DESCRIPTION OF DRAWINGS

[FIG. 1] FIG. 1 is an enlarged sectional view showing a main portion of a rolling bearing according to one embodiment of the present invention.
[FIG. 2] FIG. 2 is an enlarged sectional view showing a main portion of a rolling bearing according to another embodiment of the present invention.
[FIG. 3] FIG. 3 is an overall perspective view of a retainer provided with through-hole sections according to the one embodiment of the present invention.
[FIG. 4] FIG. 4 is a plan view of the retainer shown in FIG. 3.
[FIG. 5] FIG. 5 is an enlarged sectional view of the retainer taken along the line A-A of FIG. 4.
[FIG. 6] FIG. 6 is an overall perspective view of a retainer provided with blind holes according to another embodiment of the present invention.
[FIG. 7] FIG. 7 is a plan view of the retainer shown in FIG. 6.
[FIG. 8] FIG. 8 is an enlarged sectional view of the retainer taken along the line B-B of FIG. 7.
[FIG. 9] FIG. 9 is a schematic plan view showing a positional relationship between the retainer and a ball in the present invention.
[FIG. 10] FIG. 10 is a schematic plan view showing a positional relationship between a retainer and a ball in a comparative example.

### DESCRIPTION OF EMBODIMENTS

In the following, preferred embodiments of the present invention will be described in detail with reference to the accompanying drawings. The dimensions, materials, specific values, etc. shown in these embodiments are mere examples to help understanding of the invention, and do not limit the present invention unless otherwise noted. In this specification and the drawings, components having substantially the same function and configuration will be denoted by the same reference sign so that a repeated description thereof is omitted, while illustration or description of components which are not directly related to the present invention will be omitted.

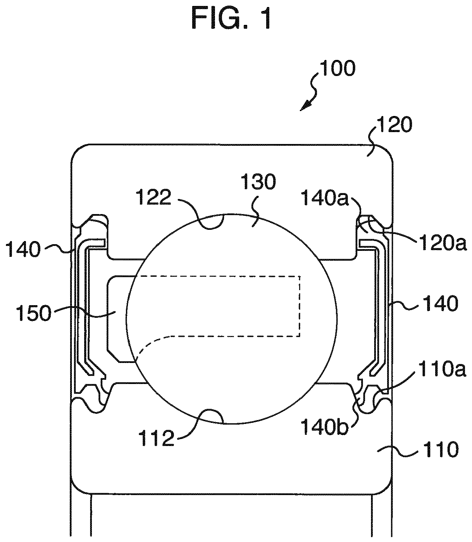

FIG. 1 is an enlarged sectional view showing a main portion of a rolling bearing according to a first embodiment of the present invention. A rolling bearing (in this case, a ball bearing) 100 shown in FIG. 1 has an inner ring 110 having a track surface 112 on the outer circumferential side, an outer ring 120 having a track surface 122 on the inner circumferential side, and a plurality of rolling elements (in this case, balls) 130 rolling between the track surfaces of the inner and outer rings. A retainer 150 for keeping circumferential intervals between the plurality of balls 130 is provided between the inner ring 110 and the outer ring 120. An oil seal 140 is mounted on each side surface of the ball bearing 100 between the inner ring 110 and the outer ring 120 so as to prevent leakage of grease. An outer diameter-side end 140a of the oil seal 140 is fitted in an oil seal fitting groove 120a formed in the inner circumference of the outer ring 120. A lip 140b is formed at an inner circumferential-side end of the oil seal 140. The lip 140b is in contact with a seal groove 110a formed in the outer circumference of the inner ring 110.

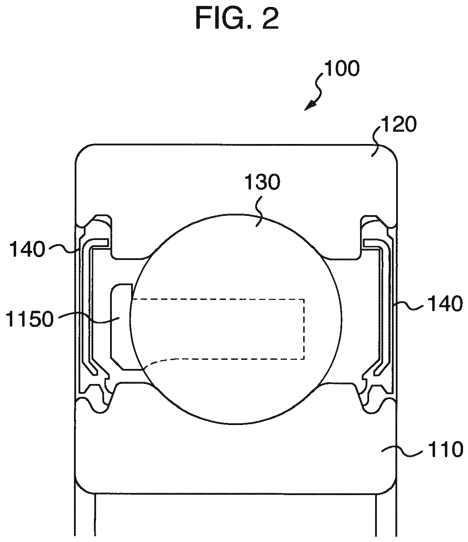

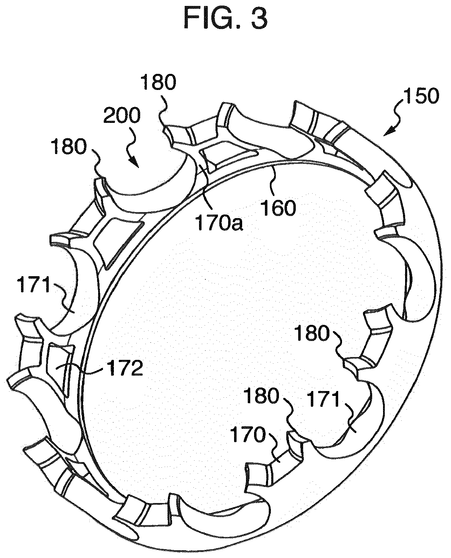

FIGS. 3 to 5 are views illustrating the retainer 150 shown in FIG. 1. The retainer 150 is an integrally molded resin part having an annular base section 160 the center of which corresponds to the axial center of the ball bearing 100, a plurality of (in this case, nine) pedestal sections 170 extending from the base section 160 in the axial direction, and claw sections 180 extending from both circumferential sides of a leading end of each pedestal section 170. Pockets 200 each having an inner surface 171 between adjacent ones of the pedestal sections 170, 170, and between opposite ones of the claw sections 180, 180 of the adjacent pedestal sections are formed, and balls 130 are received by the pockets 200. As shown in FIGS. 1 and 2, the annular base section 160 is disposed adjacent to one oil seal 140, while the pedestal sections 170 and the claw sections 180 are disposed so as to extend toward the other oil seal 140. The inner surface 171 of the pocket 200 is more specifically a curved surface or an inner spherical surface expanding along the outer surface of the ball 130, so that the ball 130 is retained so as to be able to smoothly slide and roll.

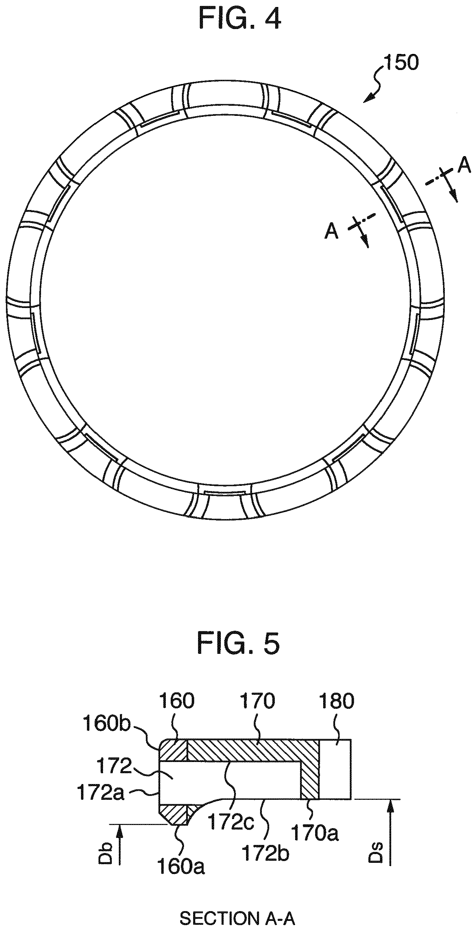

An inner diameter surface 170a is formed on the inner circumferential side of the pedestal section 170, and it is understood particularly from FIG. 5 that an inner diameter Ds of the inner diameter surface 170a is larger than an inner diameter Db of an inner diameter surface 160a of the base section 160 that is located on the innermost side. The shape of the inner diameter surface 170a of the pedestal section 170 that looks like being cut off can be molded using a molding (injection molding) die, or formed by cutting after molding.

In the retainer 150, a through-hole 172 is formed so as to extend from a bottom surface 160b of the base section 160 located on the side opposite to the pedestal section 170 to the inner diameter surface 170a of the pedestal section 170. The through-hole 172 has a bottom opening 172a opening in the bottom surface 160b of the base section 160, and a side opening 172b opening in the inner diameter surface 170a of the pedestal section 170. However, the through-hole 172 does not open to the outer circumferential side of the pedestal section 170, since a partition wall 172c is formed on the outer circumferential side of the pedestal section 170. By providing the through-hole 172 in this manner, the weight of the pedestal section 170 can be reduced so as to reduce the centrifugal force occurring as the retainer rotates, and thereby deformation of the pedestal section 170 and the claw sections 180 can be suppressed. Also, since the rigidity of the pedestal section 170 is maintained by the partition wall 172c so that the claw sections 180 do not incline toward the outer circumference even when the through-hole 172 is formed, deformation of the claw sections 180 is suppressed. Moreover, according to this configuration, even when the bearing rotates at ultrahigh speed, a lubricant such as grease enclosed inside the bearing is less likely to move toward the inner side of the outer ring under the centrifugal force, so that the lubricant is retained in the pockets and the likelihood of seizure etc. can be reduced.

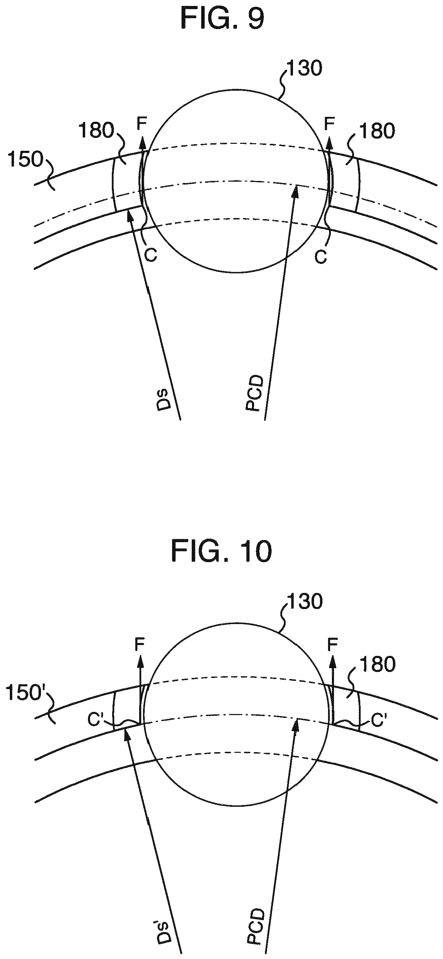

FIG. 9 shows a positional relationship between the retainer 150 and the ball 130 in the rolling bearing 100 shown in FIG. 1. As shown in FIG. 9, when the balls 130 are installed in the retainer 150, a pitch circle diameter PCD of the balls 130 is larger than the inner diameter Ds of the inner diameter surface 170a of the pedestal section 170. Thus, inner circumferential-side edges C of the pocket 200 having moved toward the radially outer side due to a centrifugal force F during high-speed rotation are allowed to come in contact with the ball 130, so that the pedestal section 170 and the claw sections 180 are prevented from further spreading toward the radially outer side and causing seizure.

By contrast, in the case of a retainer 150' of a comparative example shown in FIG. 10, the pitch circle diameter PCD of the balls 130 is smaller than an inner diameter Ds' of the inner diameter surface of the pedestal section. Thus, inner circumferential-side edges C' of the pocket having moved toward the radially outer side due to the centrifugal force F during high-speed rotation do not come in contact with the ball 130, so that the pedestal section 170 and the claw sections 180 cannot be prevented from further spreading toward the radially outer side.

FIG. 2 is an enlarged sectional view showing a main portion of a rolling bearing according to a second embodiment of the present invention. The basic configuration is the same as that of the bearing 100 shown in FIG. 1, but only a retainer 1150 is different from the retainer 150 shown in FIG. 1.

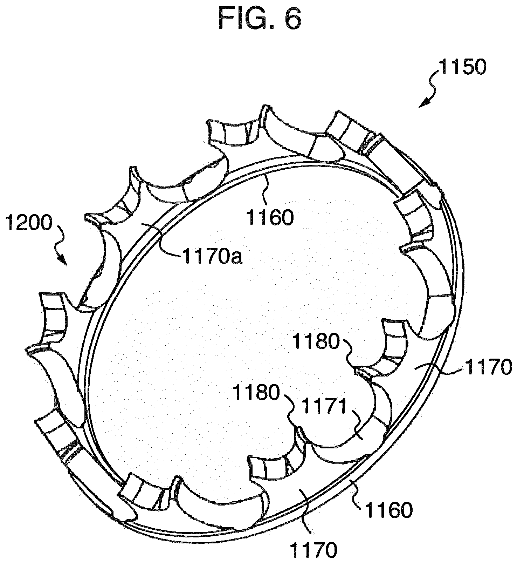

The retainer 1150 will be described in more detail using FIGS. 6 to 8. The retainer 1150 is also an integrally molded resin part having an annular base section 1160 the center of which corresponds to the axial center of the ball bearing 100, a plurality of (in this case, nine) pedestal sections 1170 extending from the base section 1160 in the axial direction, and claw sections 1180 extending from both sides of a leading end of each pedestal section 1170 in the circumferential direction. Pockets 1200 each having an inner surface 1171 between adjacent ones of the pedestal sections 1170, 1170, and between opposite ones of the claw sections 1180, 1180 of the adjacent pedestal sections 1170 are formed, and the balls 130 are received by the pockets 1200. As shown in FIGS. 1 and 6, the annular base section 1160 is disposed adjacent to one oil seal 140, while the pedestal sections 1170 and the claw sections 1180 are disposed so as to extend toward the other oil seal 140. The inner surface 1171 of the pocket 1200 is more specifically a curved surface or an inner spherical surface expanding along the outer surface of the ball 130, so that the ball 130 is retained so as to be able to smoothly slide and roll.

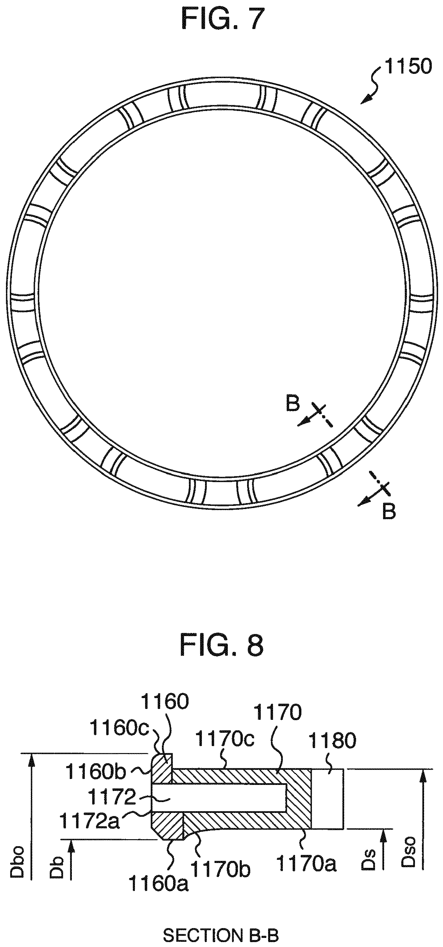

As shown in FIG. 8, an inner diameter surface 1170a is formed on the inner circumferential side of the pedestal section 1170. As in the first embodiment, the inner diameter Ds of the inner diameter surface 1170a is larger than the inner diameter Db of an inner diameter surface 1160a of the base section 1160 located on the innermost side. In the second embodiment, moreover, the retainer 1150 is cut off from the middle of an outer circumferential part to the leading end of the claw section 1180 so that an outer diameter Dso of an outer diameter surface 1170c of the pedestal section 1170 located on the outer circumferential side becomes smaller than an outer diameter Dbo of an outer diameter surface 1160c of the base section 1160 located on the outermost side. Such a shape of the pedestal section 1170 formed so that the inner diameter surface 1170a and the outer diameter surface 1170c are cut off can be molded using a molding (injection molding) die, or can be formed by cutting after molding.

As shown in FIG. 8, an inclined surface or inclined curved surface 1170b is formed on the inner circumferential side in a root part (on the side of the base section 1160) of the pedestal section 1170, and the inner diameter surface 1170a of the pedestal section 1170 is connected to the inner diameter surface 1160a of the base section 1160 so as to become gradually equal in diameter to the inner diameter surface 1160a. This configuration can further enhance the rigidity of the pedestal section 1170 and suppress deformation due to a centrifugal force.

The thickness (radial thickness) of the claw section 1180 is constant from its root part to the leading end. This is because the claw section 1180 does not need to be tapered, since deformation thereof is suppressed by the ball 130. However, the present invention is not limited to this example, and particularly the claw section 1180 may be rounded (tapered) on the outer diameter side. By reducing the weight, it is possible to bring about a deformation suppressing effect while the claw section 1180 is unlikely to come in contact with the track surface 122 of the outer ring 120.

In the retainer 1150 according to the second embodiment, a blind hole 1172 is formed to have an opening 1172a in the bottom surface 1160b of the base section 1160. By providing the blind hole 1172 in this manner, the weight of the pedestal section 1170 can be reduced to reduce the centrifugal force, and thereby deformation of the pedestal section 1170 and the claw sections 1180 can be suppressed. Further, since the pedestal section 1170 has walls on both the inner diameter side and the outer diameter side, the rigidity of the pedestal section 1170 is maintained and deformation of the claw sections 1180 is suppressed. Moreover, according to this configuration, even when the bearing rotates at high speed, a lubricant such as grease enclosed inside the bearing is less likely to move toward the inner side of the outer ring by the centrifugal force, so that the lubricant is retained in the pockets and the likelihood of seizure etc. can be suppressed.

As above, the preferred embodiments of the present invention have been described with reference to the accompanying drawings, however, it goes without saying that the present invention is not limited to these embodiments. It is clear that a person skilled in the art can conceive of various changes or modifications within the scope described in the claims, and such changes and modifications are understood to naturally belong to the technical scope of the present invention.

### REFERENCE SIGNS LIST

- 100: Rolling bearing, ball bearing
- 110: Inner ring
- 110a: Seal groove
- 112: Track surface
- 120: Outer ring
- 120a: Oil seal fitting groove
- 122: Track surface
- 130: Rolling element, ball
- 150: Retainer
- 140: Oil seal
- 140a: Outer diameter-side end
- 140b: Lip
- 160: Annular base section
- 160a: Inner diameter surface
- 160b: Bottom surface
- 170: Pedestal section
- 170a: Inner diameter surface
- 171: Inner surface
- 172: Through-hole
- 172a: Bottom opening
- 172b: Side opening
- 172c: Partition wall
- 180: Claw section
- 200: Pocket
- 1150: Retainer
- 1160: Annular base section
- 1160a: Inner diameter surface
- 1160b: Bottom surface
- 1170: Pedestal section
- 1170a: Inner diameter surface
- 1170b: Inclined surface, inclined curved surface
- 1171: Inner surface
- 1172: Blind hole
- 1172a: Opening
- 1180: Claw section
- 1200: Pocket

## Claims

1. A rolling bearing comprising an inner ring, an outer ring, a plurality of rolling elements, and a retainer for retaining the rolling elements between the inner ring and the outer ring, wherein
the retainer comprises: an annular base section; a plurality of pedestal sections extending from the base section in an axial direction and arranged in a circumferential direction of the base section; two claw sections provided on both sides of each pedestal section in the circumferential direction so as to further extend from the pedestal section in the axial direction; and a plurality of pocket sections retaining the plurality of rolling elements, each pocket section having an inner surface formed between the adjacent pedestal sections and between the opposite claw sections of the adjacent pedestal sections, the inner ring and the outer ring being separated from the retainer, the retainer being guided by the rolling elements, **characterized in that**
the pedestal section comprises an inner diameter surface having a larger inner diameter than that of an inner diameter surface of the base section, and a pitch circle diameter of the rolling elements is larger than the inner diameter of the inner diameter surface of the pedestal section, and
the base section comprises a bottom surface on an opposite side to the pedestal section in the axial direction, and the retainer further comprises a blind hole which extends from the bottom surface to the inside of the pedestal section.
